# Europäisches Patentamt
# European Patent Office
# Office européen des brevets

(19)

(11) Veröffentlichungsnummer: **0 205 416**
**B1**

(12) EUROPÄISCHE PATENTSCHRIFT

(45) Veröffentlichungstag der Patentschrift:
18.07.90

(51) Int. Cl.⁵: **C21C 5/36, C21B 3/06**

(21) Anmeldenummer: **86890142.2**

(22) Anmeldetag: **15.05.86**

(54) Verfahren zur Verwertung von Hüttenschlacke sowie Anlage zur Durchführung des Verfahrens.

(30) Priorität: **13.06.85 AT 1763/85**

(43) Veröffentlichungstag der Anmeldung:
**17.12.86 Patentblatt 86/51**

(45) Bekanntmachung des Hinweises auf die Patenterteilung:
**18.07.90 Patentblatt 90/29**

(84) Benannte Vertragsstaaten:
**BE DE FR GB IT LU NL SE**

(56) Entgegenhaltungen:
**BE-A- 790 117**
**FR-A- 2 498 310**
**US-A- 4 175 731**

**PATENT ABSTRACTS OF JAPAN, Band 8,**
**Nr. 232 (C-248)[1669], 25. Oktober 1984; &**
**JP-A-59 113 105 (SHIN NIPPON SEITETSU**
**K.K.) 29.06.1984 (Kat. A,D)**

(73) Patentinhaber: **VOEST-ALPINE INDUSTRIEANLAGENBAU GESELLSCHAFT m b.H.,**
**Turmstrasse 44, A-4020 Linz(AT)**

(72) Erfinder: **Faltejsek, Karl, Dipl.-Ing.,**
**Lüfteneggerstrasse 6, A-4020 Linz(AT)**
Erfinder: **Hulek, Anton, Dipl.-Ing., Goglerfeldgasse 15,**
**A-4040 Linz(AT)**
Erfinder: **Schmidt, Gerald, Dipl.-Ing., Quellengasse 10,**
**A-4072 Alkoven/Strassham(AT)**

(74) Vertreter: **Wolfram, Gustav, Dipl.-Ing.,**
**Schwindgasse 7 P.O. Box 205, A-1041 Wien(AT)**

## Beschreibung

Die Erfindung betrifft ein Verfahren gemäß dem Oberbegriff des Anspruches 1 sowie eine Anlage zur Durchführung des Verfahrens gemäß dem Oberbegriff des Anspruches 2.

Es ist bekannt, Hüttenschlacke in Schlackenpfannen abzustechen und in diesen vor der weiteren Verarbeitung erstarren zu lassen. Die Schlackenpfannen werden im kalten Zustand gekippt und der Inhalt gebrochen, um das am Boden des Schlackenkuchens angereicherte Metall zurückgewinnen zu können.

Zur Vermeidung der Vielzahl der hierbei erforderlichen Schlackenpfannen ist es weiters bekannt, die Schlacke im noch flüssigen Zustand in ein Schlackenkühlbett zu kippen und durch Berieselung mit Wasser abkühlen zu lassen. Die Berieselung mit Wasser wird hierbei so dosiert, daß bis zum Anfall von Schlacke aus der nächstfolgenden Schmelze das Wasser im Schlackenbett zur Gänze verdampft oder versickert ist. Trotz dieser Maßnahme sind Explosionen im Schlackenkühlbett nicht mit Sicherheit auszuschließen.

Das in der Schlacke enthaltene Metall wird beim Ausräumen des Schlackenbettes mit Hilfe von Schaufelbaggern von der Schlacke getrennt, wobei jedoch lediglich Metallstücke erhalten werden, die mehr oder weniger stark mit Schlacke verunreinigt sind. Bei diesen beiden Methoden ist es nicht möglich, die in der Schlacke enthaltene fühlbare Wärme zu nutzen.

Zur Nutzung der fühlbaren Wärme flüssiger Schlacke ist es bekannt (JP-A 52-132454), die Schlacke auf ein aus Platten gebildetes endloses Förderband zu gießen, wobei die Schlacke durch eine Kühlzone geführt wird. Gießt man die Schlacke auf das Förderband, besteht jedoch die Gefahr, daß dieses durch das in der Schlacke enthaltene flüssige Metall so verunreinigt wird, daß es zu Betriebsstörungen kommen kann. Ein weiterer Nachteil ist der, daß das Metall erst im erstarrten Zustand von der Schlacke getrennt erhalten wird.

Aus der JP-A 59-113105 ist ein Verfahren bekannt, bei dem die Schlacke vor der Weiterverarbeitung ein Gefäß durchströmt, in dem sich die Metallschmelze am Boden sammelt, wogegen die Schlacke über einen Überlauf des Gefäßes weiterläuft. Das Gefäß kann von Zeit zu Zeit gekippt werden, um die Metallschmelze durch eine im gekippten Zustand im Unterteil des Gefäßes zu liegen kommende Gießöffnung ausfließen zu lassen. Bei diesem Gefäß handelt es sich um ein während des Schmelzenabstiches eines Hochofens stetig durchströmtes Wehr, wodurch während des Schmelzenabstiches das Absetzen des Metalles nicht sichergestellt ist. Es kann bei starker Schlackenströmung zu einem ungenügenden Absetzen des Metalles und zu einem Mitfließen desselben mit der Schlackenschmelze kommen. Weiters fällt gereinigte Schlacke nur im Rhythmus des Schlackenabstiches an, so daß eine kontinuierliche Weiterverarbeitung der Schlacke nicht möglich ist.

Aus der US-A 4,175,731 sind ein Verfahren gemäß dem Oberbegriff des Anspruches 1 sowie eine Anlage gemäß dem Oberbegriff des Anspruches 2 bekannt, bei denen Hochofenschlacke in ein ortsfestes Absetzgefäß eingegossen und das sich an dessen tiefster Stelle absetzende Roheisen über einen Bodenabstich abgelassen wird. Hierbei wird die Wärme der Schlacke in dem Absetzgefäß rückgewonnen und die dadurch relativ kühle Schlacke über einen Schlackenabstich auf ein Förderband gegossen, welches durch Aufspritzen von Kühlmittel gekühlt wird. Dabei ist nachteilig, daß durch den Wärmeentzug der im Absetzgefäß befindlichen Schlacke die Gefahr des Einfrierens des Absetzgefäßes gegeben ist. Da die Schlacke fließfähig sein muß, kann nur ein Teil ihrer Wärme rückgewonnen werden. Weiters ist nachteilig, daß die gereinigte Schlacke nicht kontinuierlich anfällt, so daß eine kontinuierliche Schlackenverarbeitung nicht möglich ist.

Aus der WO 82/01505 ist es bekannt, bei der Herstellung von Formkörpern aus Hüttenschlacke die Hüttenschlacke kontinuierlich auf ein umlaufendes Formband zu gießen. Um plattenförmige Formkörper aus der Hüttenschlacke herstellen zu können, wird jedoch die Schlacke zunächst auf einen Temperaturbereich gebracht, in dem sie zähflüssig bzw. teigförmig ist. Oberhalb des Formbandes sind Rohrschlangen zur Gewinnung der fühlbaren Wärme der vergossenen, erstarrenden Schlacke vorgesehen. Da die Schlacke bereits vor dem Vergießen auf das Formband stark abgekühlt ist, ist es nur möglich, einen Teil der ursprünglich in der Schlacke enthaltenen Wärme rückzugewinnen.

Die Erfindung bezweckt die Vermeidung dieser Nachteile und Schwierigkeiten und stellt sich die Aufgabe, ein Verfahren gemäß dem Oberbegriff des Anspruches 1 sowie eine Anlage gemäß dem Oberbegriff des Anspruches 2 zu schaffen, welche nicht nur eine kontinuierliche Rückgewinnung der fühlbaren Wärme der Schlacke beim Erstarren derselben ermöglichen, sondern auch eine zuverlässige Rückgewinnung des die Schlacke verunreinigenden Metalles im noch flüssigen Zustand gestatten, wobei der apparative Aufwand möglichst gering gehalten werden soll und Explosionsgefahren praktisch ausgeschlossen sein sollen.

Diese Aufgabe wird für ein Verfahren erfindungsgemäß durch die Merkmale des kennzeichnenden Teiles des Anspruches 1 gelöst.

Eine Anlage gemäß dem Oberbegriff des Anspruches 2, wie sie aus der US-A 4 175 731 bekannt ist, ist zur Durchführung des erfindungsgemäßen Verfahrens durch die Merkmale des kennzeichnenden Teiles des Anspruches 2 gekennzeichnet.

Wesentlich für die vorliegende Erfindung ist, daß zur Wärmerückgewinnung aus der flüssigen Schlacke eine Trennung derselben von der Metallschmelze stattfindet und daß die diskontinuierlich anfallende Schlacke kontinuierlich auf das Förderband vergossen werden kann, wobei der Behälter, in dem die diskontinuierlich anfallende Schlacke in dem Umfang gesammelt wird, der ein kontinuierliches Abgießen derselben sichert, gleichzeitig dazu dient, die Schlacke von Metallschmelze durch Gravitationswirkung zu reinigen. Durch diese Maßnahme ist es möglich, mit einem geringen Aufwand ein Maximum an Wärme- und Metallrückgewinnung zu erzielen.

Zweckmäßig ist die Drehachse des zylindrischen Absetz-Vorratsbehälters gegenüber dem Fundament geneigt angeordnet, vorzugsweise um 3 bis 5° geneigt.

Um möglichst ohne Beheizung des Absetz-Vorratsbehälters auszukommen, ist dieser vorteilhaft mit einer Wärmeisolierung versehen.

Um mit Metallschmelze vermischte Schlackenschmelze auf bequeme Art in den Absetz-Vorratsbehälter eingießen zu können, u.zw. auch dann, wenn dieser unterschiedliche um seine Achse gedrehte Lagen einnimmt, weist zweckmäßig die Eingießöffnung für die Hüttenschlacke die Form eines sich über einen Teil des Umfanges des zylindrischen Absetz-Vorratsbehälters erstreckenden Schlitzes auf, der vorzugsweise mittels eines Deckels verschließbar ist.

Um einen einfachen Abstich der Metallschmelze zu ermöglichen, ist zweckmäßig die Ausgießöffnung für die Metallschmelze mittels eines Schieberverschlusses verschließbar, wobei vorteilhaft die Ausgießöffnung mit einer Heizeinrichtung, vorzugsweise einer Induktionsheizung, versehen ist.

Zwecks sicherer Entleerung des Behälters bei Ausfall des Schiebers und der Dreheinrichtung ist eine vorteilhafte Ausführungsform dadurch gekennzeichnet, daß zusätzlich zur Ausgießöffnung ein mit einer feuerfesten Masse verstopfbares Abstichloch vorgesehen ist.

Um ein Einfrieren der in dem Absetz-Vorratsbehälter eingebrachten flüssigen Schlacke mit Sicherheit zu vermeiden, ist zweckmäßig an der Stirnseite des der Ausgießöffnung der Metallschmelze zugeordneten Endes des Absetz-Vorratsbehälters mindestens eine Öffnung zum Einbringen eines Brenners vorgesehen.

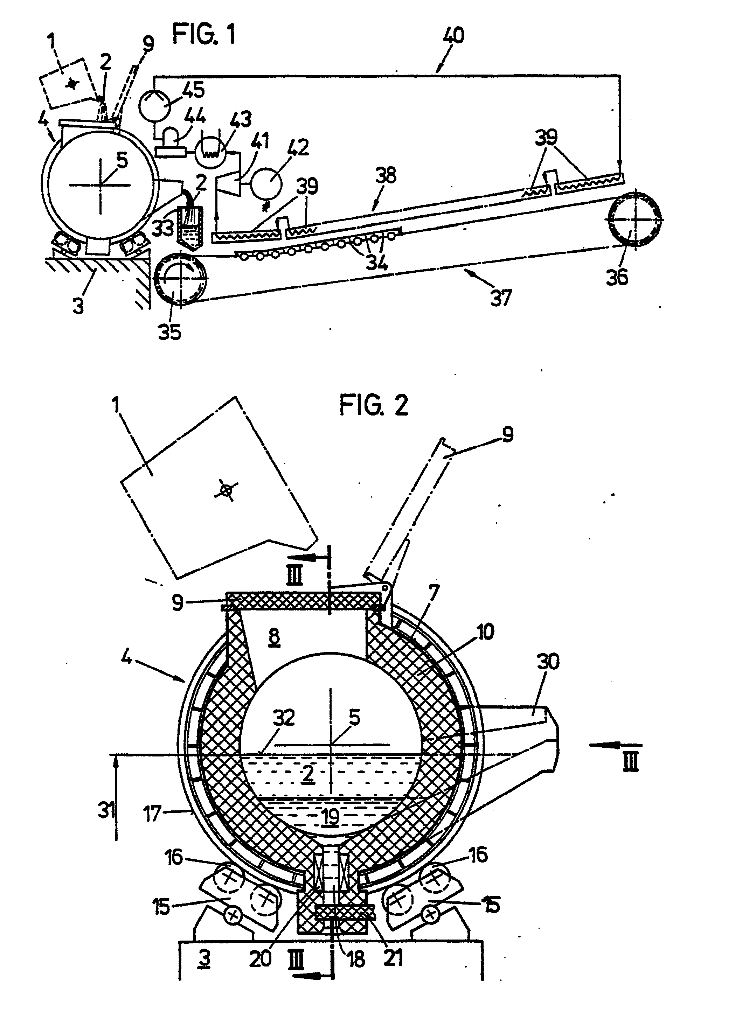

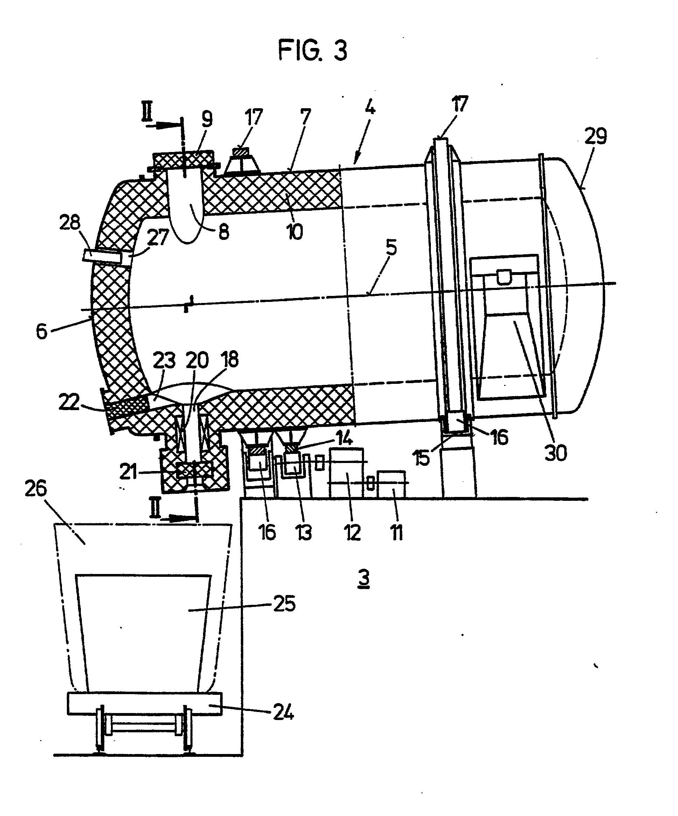

Die Erfindung ist nachstehend anhand der Zeichnung näher erläutert, wobei Fig. 1 eine schematische Seitenansicht einer Anlage zur Durchführung des erfindungsgemäßen Verfahrens, Fig. 2 einen Schnitt (gemäß der Linie II-II der Fig. 3) quer zur Längsachse eines Absetz-Vorratsbehälters und Fig. 3 einen Teilschnitt sowie eine Teilansicht desselben gemäß der Linie III-III bzw. gemäß dem Pfeil III der Fig. 2 zeigen.

Mit 1 ist ein die Schlacke 2 vom Stahlwerk heranbringendes Schlackentransportgefäß bezeichnet, mit dem die flüssige Schlacke zu einem zylindrisch ausgebildeten und liegend am Fundament 3 angeordneten Absetz-Vorratsbehälter 4 gebracht wird. Dieser Absetz-Vorratsbehälter 4 ist mit seiner Zylinderachse 5 gegenüber dem Fundament 3 geneigt angeordnet, u.zw. vorzugsweise zwischen 3 und 5° geneigt.

Nahe seinem tiefer liegenden Ende 6 ist der Absetz-Vorratsbehälter 4 an der Oberseite des Zylindermantels 7 mit einer Eingießöffnung 8 für die flüssige Schlacke 2 versehen, die als sich über einen Teilbereich des Querschnitt-Umfanges erstreckender Schlitz ausgebildet ist und die mit einem Deckel 9 verschließbar ist. Der Absetz-Vorratsbehälter 4 ist innenseitig mit einer feuerfesten Auskleidung 10 versehen, wobei die feuerfeste Auskleidung 10 so beschaffen ist, daß eine ausgezeichnete Wärmeisolation sichergestellt ist.

Der Absetz-Vorratsbehälter 4 ist am Fundament 3 um seine Zylinderachse 5 drehbar gelagert und mittels eines am Fundament angeordneten Antriebsmotors 11 über ein Getriebe 12 und ein Ritzel 13, welches in eine am Umfang des Absetz-Vorratsbehälters 4 angeordnete Zahnstange 14 eingreift, drehbar. Zur Abstützung des Behälters 4 dienen am Fundament 3 über Balanciers 15 gelagerte Stützrollen 16, auf denen der Behälter 4 mittels an seinem Umfang angeordneter Stützbahnen 17 anliegt.

Am tiefer liegenden Ende 6 ist bodenseitig eine Ausgießöffnung 18 für die sich im Absetz-Vorratsbehälter 4 absetzende Metallschmelze 19 vorgesehen, der zur Verhinderung eines Zufrierens elektrisch, vorzugsweise mittels einer Induktionsheizung 20, beheizbar ist. Die Ausgießöffnung ist mittels eines Absperrschiebers 21 verschließbar. Für den Notbetrieb ist am tiefer liegenden Ende 6 des Behälters 4 ein mit einer feuerfesten Masse 22 verstopftes Abstichloch 23 angeordnet, durch welches bei Versagen des Schiebers 21 bzw. Drehantriebes 11, 12, 13 die Metallschmelze 19 (und auch die Schlacke 2) aus dem Behälter 4 ausfließen gelassen werden kann. Unter der Ausgießöffnung 18 bzw. Abstichöffnung 23 für die Metallschmelze 19 ist ein Transportwagen 24 mit einer Stahlpfanne 25 oder einer Schlackenpfanne 26 in Stellung bringbar.

In der an diesem tiefer liegenden Ende 6 angeordneten Stirnwand des Behälters 4 ist eine Öffnung 27 vorgesehen, durch die eine Heizeinrichtung 28 in das Innere des Behälters eingeführt werden kann, um gegebenenfalls ein Abkühlen des Inhaltes zu vermeiden.

Am höher gelegenen gegenüberliegenden Ende 29 des Absetz-Vorratsbehälters 4 ist am Zylindermantel 7 eine Ausgießschnauze 30, die sich vom Zylindermantel 7 radial nach außen erstreckt, vorgesehen, durch welche die flüssige Schlacke 2 abgezogen wird. Diese Ausgießschnauze 30 wird je nach Höhe 31 des im Behälter 4 vorhandenen Schlackenspiegels 32 in Stellung gebracht, so daß eine genau definierte Menge an flüssiger Schlacke 2 aus dem Behälter 4 ausfließt.

Wie aus Fig. 1 ersichtlich, fließt die Schlacke 2, eventuell unter Zwischenschaltung eines in Fig. 1 dargestellten Zwischengefäßes 33, auf ein aus Gliederkörpern 34 zusammengesetztes endloses, um zwei Umlenkräder 35, 36 umgelenktes Förderband 37, auf dem die Schlacke erstarrt. Dieses Förderband wird durch eine Kühlzone 38 geführt, die mit Wärmetauschern 39 ausgestattet ist. Die Wärmetauscher 39 sind von einem Kühlmedium, vorzugsweise von Wasser, durchströmt. Das erhitzte Kühlmedium wird in einem thermodynamischen Kreisprozeß 40 geführt. Der aus dem Kühlmedium entstandene Dampf wird einer Turbine 41 zugeleitet, die einen Generator 42 treibt. Von der Turbine 41 wird der entspannte Dampf in einen Kondensator 43 geführt. Das aus dem Kondensator 43 austretende Kühlmittel gelangt in einen Speisewasserbehälter 44 mit Entgaser. Mittels einer Pumpe 45 wird das Kühlmedium vom Speisewasserbehälter 44 wieder der Kühlzone 38 bzw. den Wärmetauschern 39 zugeleitet.

Die Vorrichung zur Gewinnung der fühlbaren Wärme der Schlacke ist im dargestellten Ausführungsbeispiel lediglich schematisch dargestellt. Sie kann insbesondere in der Art ausgestaltet sein, wie dies in der AT-B - 380.490 beschrieben ist.

Um ein gleichmäßiges Ausgießen der Schlacke aus dem Absetz-Vorratsbehälter zu sichern, werden die Drehbewegungen des Behälters 4 entsprechend einem Ergebnis einer Abtastung des Ausflußquerschnittes geregelt.

Die Funktion der Einrichtung ist folgende:

Nach jedem Abstich wird LD-Schlacke 2 in einer Menge von ca. 12 t zusammen mit etwa 1 t Stahl, welcher in der Schlacke 2 feintropfig verteilt ist, mittels eines Kranes mit Hilfe der Schlackenpfanne 1 in den Absetz-Vorratsbehälter 4 eingebracht. Dieser Absetz-Vorratsbehälter 4 hat ein Nutzvolumen von etwa fünf Schlackenabstichen. In diesem Behälter 4 setzt sich der feintropfig verteilte Stahl 19 ab und wird von Zeit zu Zeit abgestochen und in die Roheisenhalle zurückgebracht. Durch diese Maßnahme ist es möglich, den in der Schlacke vermischten Stahl zu 80 bis 90 % im flüssigen Zustand zurückzugewinnen.

Die auf das Förderband 37 aufgebrachte Schlacke erstarrt innerhalb von etwa 5 min und gibt ihre Wärme durch Strahlung nach oben bzw. Wärmeleitung in die Gliederkörper 34 des Förderbandes 37 ab. Die Abwurftemperatur der Schlacke beträgt etwa 800 bis 900°C, die Nutzwärme zwischen dem Abgießen der Schlacke aus dem Zwischenbehälter 33 bei rund 1550°C und der Abwurftemperatur wird zu etwa 40 bis 45 % direkt durch Strahlung und zum Rest indirekt über die Gliederkörper 34, die die von ihnen gespeicherte Wärme ebenfalls über nicht dargestellte Wärmetauscher abgeben, des Förderbandes 37 gewonnen. Die abgeworfene Schlacke wird zweckmäßig mittels Vorbrecher auf eine Stückgröße von unter 10 mm gebrochen und in nicht näher dargestellte Kühlrinnen eingebracht, in denen durch Wärmeübergang auf Verdampfer- und Speisewasservorwärmrohre eine weitere Abkühlung auf etwa 300°C erfolgt. Zwecks Verbesserung der mechanischen Eigenschaften der Schlacke wird die vom Förderband 37 abgeworfene Schlacke wahlweise in einem Schacht oder in einer Grube sehr langsam weitergekühlt.

Ein besonderer Vorteil der Erfindung liegt darin, daß ein kontinuierlicher Betrieb der Turbine 41 infolge des kontinuierlichen Abgießens der Schlacke 2 und damit eine kontinuierliche Energieversorgung sichergestellt ist, obwohl die Schlacke aus dem LD-Stahlwerk nur chargenweise angeliefert wird. Eine Verunreinigung der Gliederkörper 34 durch Eisen-bzw. Stahlteile ist infolge der Rückgewinnung des flüssigen Metalles ausgeschlossen.

Die Erfindung eignet sich nicht nur zum Verwerten von LD-Schlacke, sondern auch zum Verwerten von Hochofenschlacke, wobei lediglich auf die unterschiedliche chemische Zusammensetzung der Hochofenschlacke Rücksicht genommen werden muß, z.B. bei der Ausmauerung des Absetz-Vorratsbehälters 4.

Die geometrische Form des Absetz-Vorratsbehälters 4 muß nicht unbedingt streng zylindrisch sein, sondern dieser Behälter 4 kann auch konisch mit geringem Kegelöffnungswinkel ausgeführt werden, wobei der größte Durchmesser des Behälters im Bereich der Ausgieß- bzw. Abstichöffnung 18, 23 für die Metallschmelze zu liegen kommt und die Drehachse des Behälters geneigt ist, vorzugsweise jedoch horizontal angeordnet ist.

Zweckmäßig ist der Absetz-Vorratsbehälter 4 am Übergang eines ersten Hallenschiffes (der Stahlwerkshalle) zu einem benachbarten Hallenschiff angeordnet, wobei das mit der Eingießöffnung 8 versehene Ende im Bestreichungsbereich eines Kranes des ersten Hallenschiffes liegt und die Ausgießschnauze 30 für die Schmelze in das benachbarte Hallenschiff ragt, in der das Förderband 37 untergebracht ist.

## Patentansprüche

1. Verfahren zur Verwertung von mit Metallschmelze (19) vermischten Hüttenschlacken (2), insbesondere LD-Schlacken (2), wobei die Schlacke (2) diskontinuierlich in einen liegend angeordneten Absetz-Vorratsbehälter (4) eingebracht wird und die Metallschmelze (19) innerhalb desselben durch Gravitationswirkung von der Schlacke (2) getrennt, an der tiefsten Stelle des Absetz-Vorratsbehälters (4) diskontinuierlich abgestochen und im schmelzflüssigen Zustand in den Schmelzprozeß rückgeführt wird, und wobei die Schlacke (2) aus dem Absetz-Vorratsbehälter (4) auf ein Förderband (37) fließt, dadurch gekennzeichnet,

a) daß der Absetz-Vorratsbehälter (4) um seine Längsachse (5) drehbar ist,

b) daß die Schlacke (2) aus dem Absetz-Vorratsbehälter (4) kontinuierlich abgezogen wird;

c) daß die Schlacke (2) im schmelzflüssigen Zustand kontinuierlich auf ein Förderband (37) vergossen wird, wobei während des Abkühlens der Schlacke (2) ihre fühlbare Wärme über Wärmeaustauscher (39) rückgewonnen wird.

2. Anlage zur Durchführung des Verfahrens nach Anspruch 1, mit einem liegend angeordneten Behälter (4) zur Aufnahme der mit Metallschmelze (19) vermischten Hüttenschlacke (2), welcher mit einem Schlackenüberlauf (30) und an seiner tiefsten Stelle mit einer Ausgießöffnung (18) für die Metallschmelze (19) versehen ist und mit einem die flüssige Schlacke aufnehmenden Förderband (37), dadurch gekennzeichnet, daß der Behälter (4) als um seine Längsachse (5) drehbarer, geschlossener Absetz-Vorratsbehälter (4) ausgebildet ist, der nahe bei einem Ende (6) mit einer Ausgießöffnung (18) für die Metallschmelze (19) und einer Eingießöffnung (8) für die mit Metallschmelze (19) vermischte Hüttenschlacke (2) sowie an dem gegenüberliegenden Ende (29) mit einer durch Drehung des Behälters (4) in unterschiedliche Höhenlagen bringbaren Ausgießschnauze (30) für die Hüttenschlacke (2) ausgestattet ist, und daß die Vorrichtung zur Gewinnung der fühlbaren Wärme der Schlacke von einem über mindestens zwei Umlenkräder (35, 36) geführten, aus gelenkig verbundenen Gliederkörpern (34) gebildeten endlosen Förderband (37) gebildet ist, dessen Obertrum mit der auf ihm aufgegossenen Hüttenschlacke durch eine mit Wärmetauschern (39) ausgestatteten Kühlzone (38) geführt ist.

3. Anlage nach Anspruch 2, dadurch gekennzeichnet, daß die Drehachse (5) des zylindrischen Absetz-Vorratsbehälters (4) gegenüber dem Fundament geneigt angeordnet ist.

4. Anlage nach Anspruch 2 oder 3, dadurch gekennzeichnet, daß der Absetz-Vorratsbehälter (4) mit einer Wärmeisolierung (10) versehen ist.

5. Anlage nach einem oder mehreren der Ansprüche 2 bis 4, dadurch gekennzeichnet, daß die Eingießöffnung (8) für die Hüttenschlacke (2) die Form eines sich über einen Teil des Umfanges des zylindrischen Absetz-Vorratsbehälters (4) erstreckenden Schlitzes aufweist.

6. Anlage nach einem oder mehreren der Ansprüche 2 bis 5, dadurch gekennzeichnet, daß die Ausgießöffnung (18) für die Metallschmelze (19) mittels eines Schieberverschlusses (21) verschließbar ist.

7. Anlage nach einem oder mehreren der Ansprüche 2 bis 6, dadurch gekennzeichnet, daß die Ausgießöffnung (18) mit einer Heizeinrichtung versehen ist.

8. Anlage nach einem oder mehreren der Ansprüche 2 bis 7, dadurch gekennzeichnet, daß zusätzlich zur Ausgießöffnung (18) ein mit einer feuerfesten Masse (22) verstopfbares Abstichloch (23) vorgesehen ist.

9. Anlage nach einem oder mehreren der Ansprüche 2 bis 8, dadurch gekennzeichnet, daß an der Stirnseite des der Ausgießöffnung (18) der Metallschmelze zugeordneten Endes de Absetz-Vorratsbehälters (4) mindestens eine Öffnung (27) zum Einbringen eines Brenners (28) vorgesehen ist.

10. Anlage nach einem oder mehreren der Ansprüche 2 bis 9, dadurch gekennzeichnet, daß der Behälter (4) zylindrisch ausgebildet ist.

11. Anlage nach einem oder mehreren der Ansprüche 7 bis 10, dadurch gekennzeichnet, daß die Heizeinrichtung als Induktionsheizung (20) ausgebildet ist.

## Claims

1. A process for utilizing metallurgical slags (2) mixed with metal melt (19), in particular LD slags (2), wherein the slag (2) is discontinuously introduced into a horizontally arranged settling reservoir (4) and the metal melt (19) is gravitationally separated from the slag (2) within the same, is discontinuously tapped on the lowermost point of the settling reservoir (4) and is returned to the melting process in the molten state, the slag (2) flowing from the settling reservoir (4) onto a conveying belt (37), characterised in that
   a) the settling reservoir (4) is rotatable about its longitudinal axis (5),
   b) the slag (2) is continuously drawn off the settling reservoir (4);
   c) slag (2) is continuously poured onto a conveying belt (37) in the molten state, its sensible heat being recovered by means of heat exchangers (39) during cooling of the slag (2).

2. A plan for carrying out the process according to claim 1, comprising a horizontally arranged vessel (4) for retaining the metallurgical slag (2) mixed with metal melt (19), which is provided with a slag overflow (30) and with a pouring opening (18) for the metal melt (19) on its lowermost point, and a conveying belt (37) receiving the molten slag, characterised in that the reservoir (4) is designed as a closed settling reservoir (4), which is rotatable about its longitudinal axis (5) and is provided with a pour-out opening (18) for the metal melt (19) and with a pour-in opening (8) for the metallurgical slag (2) mixed with metal melt (19) neart one end (6) as well as with a pouring spout (30) for the metallurgical slag (2), which can be placed in different height levels by rotation of the vessel (4), on the opposite end (29), and that the means for recovering the sensible heat of the slag is formed by an endless conveying belt (37) comprised of articulately connected link bodies (34) and guided over at least two deflection pulleys (35, 36), the carrying run of which conveying belt, with the metallurgical slag poured thereon, is guided through a cooling zone (38) equipped with heat exchangers (39).

3. A plant according to claim 2, charaterised in that the axis of rotation (5) of the cylindrical settling reservoir (4) is arranged to be inclined relative to the base.

4. A plant according to claim 2 or 3, characterised in that the settling reservoir (4) is provided with a heat insulation (10).

5. A plant according to one or several of claims 2 to 4, characterised in that the pour-in opening (8) for the metallurgical slag (2) is realized in the form of a slot extending over part of the circumference of the cylindrical settling reservoir (4).

6. A plant according to one or several of claims 2 to 5, characterised in that the pour-out opening (18) for the metal melt (19) is closeable by means of a slide closure (21).

7. A plant according to one or several of claims 2 to 6, characterised in that the pour-out opening (18) is provided with a heating means.

8. A plant according to one or several of claims 2 to 7, characterised in that, in addition to the pour-out opening (18), a tap hole (23) closeable by a refractory mass (22) is provided.

9. A plant according to one or several of claims 2 to 8, characterised in that at least one opening (27) for introducing a burner (28) is provided on the front face of the end of the settling reservoir (4) allocated to the pour-out opening (18) of the metal melt.

10. A plant according to one or several of claims 2 to 9, characterised in that the vessel (4) is cylindrically designed.

11. A plant according to one or several of claims 7 to 10, characterised in that the heating means is designed as an induction heating (20).

## Revendications

1. Procédé pour la mise en valeur de laitiers sidérurgiques (2) mélangés avec du métal en fusion (19), en particulier de laitiers LD (2), selon lequel on introduit le laitier (2) de façon discontinue dans un récipient de décantation-réservoir (4) disposé couché, on sépare le métal en fusion (19) du laitier (2) à l'intérieur de ce récipient par effet de gravitation, on coule le métal en fusion de façon discontinue à l'endroit le plus bas du récipient de décantation-réservoir (4) et on le réintroduit à l'état liquide dans le processus de fusion, et dans lequel on fait couler le laitier (2) du récipient de décantation-réservoir (4) sur une bande transporteuse (37), caractérisé en ce que,

a) on peut faire tourner le récipient de décantation-réservoir (4) autour de son axe longitudinal (5);

b) on retire le laitier (2) de façon continue du récipient de décantation-réservoir (4); et

c) on coule le laitier (2) à l'état liquide de façon continue sur une bande transporteuse (37), en récupérant, au moyen d'échangeurs de chaleur (39), la chaleur sensible du laitier (2) pendant le refroidissement de celui-ci.

2. Installation pour la mise en œuvre du procédé selon la revendication 1, comprenant un récipient (4) disposé couché pour recevoir le laitier sidérurgique (2), mélangé avec du métal en fusion (19), le récipient étant muni d'un trop-plein (30) le laitier et, à son endroit le plus bas, d'une ouverture de sortie (18) pour la coulée du métal en fusion (19), ainsi qu'une bande transporteuse (37) recevant le laitier liquide, caractérisée en ce que le récipient (4) est réalisé comme un récipient de décantation-réservoir (4) fermé, que l'on peut faire tourner autour de son axe longitudinal (5), qui est équipé, près d'une extrémité (6), d'une ouverture de sortie (18) pour la coulée du métal en fusion (19) et d'une ouverture de chargement par coulée (8) pour le laitier sidérurgique (2) mélangé avec du métal en fusion (19) et, à l'extrémité (29) opposée, d'un bec de déversement (30) pour le laitier sidérurgique (2), que l'on peut amener é différentes positions en hauteur par la rotation du récipient (4), et que le dispositif pour la récupération de la chaleur sensible du laitier est formé par une bande transporteuse (37) sans fin, guidée pour circuler autour d'au moins deux roues de renvoi (35, 36) et constituée de pièces formant des maillons (34) reliés entre eux par des articulations, dont le brin supérieur, avec le laitier sidérurgique coulé sur lui, passe par une zone de refroidissement (38) équipée d'échangeurs de chaleur (39).

3. Installation selon la revendication 2, caractérisée en ce que l'axe de rotation (5) du récipient de décantation-réservoir cylindrique (4) est incliné par rapport à la fondation.

4. Installation selon la revendication 2 ou 3, caractérisée en ce que le récipient de décantation-réservoir (4) est pourvu d'une isolation thermique (10).

5. Installation selon une ou plusieurs des revendication 2 à 4, caractérisée en ce que l'ouverture de chargement (8) pour le laitier sidérurgique (2) affecte la forme d'une fente s'étendant sur une partie du pourtour du récipient de décantation-réservoir cylindrique (4).

6. Installation selon une ou plusiers des revendications 2 à 5, caractérisée en ce que l'ouverture de sortie (18) pour le métal en fusion (19) peut être fermée par un tiroir (21).

7. Installation selon une ou plusieurs des revendications 2 à 6, caractérisée en ce que l'ouverture de sortie (18) est pourvue d'un dispositif de chauffage.

8. Installation selon une ou plusieurs des revendications 2 à 7, caractérisée en ce qu'un trou de coulée (23), pouvant être bouché par une masse réfractaire (22), est prévu en plus de l'ouverture de sortie (18).

9. Installation selon une ou plusieurs des revendications 2 à 8, caractérisée en ce qu'au moins une ouverture (27) pour l'introduction d'un brûleur (28) est prévue dans le côté de tête à l'extrémité du récipient de décantation-réservoir (4) coordonnée à l'ouverture de sortie (18) du métal en fusion.

10. Installation selon une ou plusieurs des revendications 2 à 9, caractérisée en ce que le récipient (4) est cylindrique.

11. Installation selon une ou plusieurs des revendications 7 à 10, caractérisée en ce que le dispositif de chauffage est un chauffage à induction (20).

FIG. 1

FIG. 2

## FIG. 3